# Europäisches Patentamt

**European Patent Office**

**Office européen des brevets**

(11) Veröffentlichungsnummer: **0 242 678 B1**

(12)

# EUROPÄISCHE PATENTSCHRIFT

(45) Veröffentlichungstag der Patentschrift: **02.10.91**

(51) Int. Cl.5: **C01B 25/12**

(21) Anmeldenummer: **87105015.9**

(22) Anmeldetag: **04.04.87**

(54) Verfahren zur Herstellung von Phosphorpentoxid mit verminderter Reaktivität.

(30) Priorität: **25.04.86 DE 3614041**

(43) Veröffentlichungstag der Anmeldung:
**28.10.87 Patentblatt 87/44**

(45) Bekanntmachung des Hinweises auf die
Patenterteilung:
**02.10.91 Patentblatt 91/40**

(84) Benannte Vertragsstaaten:
**DE FR GB IT NL**

(56) Entgegenhaltungen:
**EP-A- 0 000 698     EP-A- 0 189 766**
**DD-A- 222 268       DE-C- 444 664**
**US-A- 2 988 426      US-A- 3 077 382**

(73) Patentinhaber: **HOECHST AKTIENGESELL-
SCHAFT**
**Postfach 80 03 20**
**W-6230 Frankfurt am Main 80(DE)**

(72) Erfinder: **Kowalski, Werner**
**An Ginsterberg 7**
**W-5354 Weilerswist(DE)**
Erfinder: **Dahmen, Theo**
**Von-Westerburg-Strasse 24**
**W-5040 Brühl(DE)**
Erfinder: **Haas, Hans, Dr.**
**Bünnagel Ring 17**
**W-5357 Swisttal(DE)**
Erfinder: **Schimmel, Günther, Dr.**
**Ehrenstrasse 16**
**W-5042 Erftstadt(DE)**

## Beschreibung

Die vorliegende Erfindung betrifft ein Verfahren zur Herstellung von hexagonalem Phosphorpentoxid mit verminderter Reaktivität durch Abscheidung aus einem in einer Verbrennungszone aus flüssigem gelbem Phosphor und trockenen sauerstoffhaltigen Gasen erhaltenen phosphorpentoxidhaltigen Gasstrom in einer der Verbrennungszone nachgeschalteten, mit einem wassergekühlten Tauchrohr versehenen Kondensationszone, wobei die sauerstoffhaltigen Gase aus einem Gemisch aus Luft und reinem Sauerstoff bestehen und wobei der Gasstrom im Tauchrohr eine mittlere Temperatur von 450 bis 600 °C aufweist.

Phosphorpentoxid existiert in drei kristallinen Modifikationen, von denen die beiden orthorhombischen Modifikationen (sog. O- bzw. O'-Formen) reaktionsträge sind, während die hexagonale Modifikation (sog. H-Form) sich mit Wasser stürmisch umsetzt.

Für die Umsetzung von Phosphorpentoxid mit Alkoholen zu Phosphorsäureestern empfiehlt es sich, ein $P_4O_{10}$ mit geringerer Aktivität zu verwenden, um von Braunfärbung des Esters begleitete Nebenreaktionen infolge zu starker Wärmeentwicklung bei der Umsetzung zu vermeiden, während bei der Verwendung des Phosphorpentoxids bei organischen Kondensationsreaktionen ein $P_4O_{10}$ mit hoher Reaktivität erwünscht ist. Es ist daher erforderlich, für die verschiedenen Einsatzgebiete Phosphorpentoxid mit unterschiedlicher Reaktivität zu verwenden.

Aus der US-A-3 077 382 ist ein Verfahren zur Herstellung von Phosphorpentoxid mit einer Reaktivität, welche zwischen der Reaktivität der reaktionsträgen orthorhombischen Form und der handelsüblichen $P_4O_{10}$-Sorten in der H-Form liegt, bekannt. Nach diesem Verfahren wird der heiße phosphorpentoxidhaltige Gasstrom durch ein Fließbett aus monomeren $P_4O_{10}$-Teilchen geleitet, welche auf Temperaturen zwischen 90 und 365 °C gehalten werden, wobei das Phosphorpentoxid aus dem Gasstrom kondensiert.

Nach der EP-A-189 766 läßt sich die Reaktivität von hexagonalem Phosphorpentoxid dadurch vermindern, daß man das Phosphorpentoxid im beheizten Drehrohr, Muldenkneter oder Trogwärmetauscher mit Transport- und Mischschnecke bei Temperaturen zwischen 200 und 390 °C tempert.

Nachteilig ist bei diesen Verfahren zur nachträglichen Behandlung des Phosphorpentoxids, daß sie einen beträchtlichen apparativen Aufwand erfordern und einen hohen Energiebedarf haben.

Schließlich ist aus der EP-A-698 eine Vorrichtung zur Herstellung von hexagonalem Phosphorpentoxid bekannt, welche aus einer Verbrennungskammer besteht, deren Innenwand aus Kühlrohren aufgebaut ist. In die Verbrennungskammer ragt eine horizontal angeordnete Zweistoffdüse mit Zuführungsleitungen für flüssigen gelben Phosphor und trockene sauerstoffhaltige Gase hinein. Die Verbrennungskammer ist über einen Gaskühler mit einer Kondensationskammer verbunden, wobei der Gaskühler aus einem Kühlrohrsystem besteht und die Wände der Kondensationskammer mit einer Kühleinrichtung versehen sind. Die Kondensationskammer weist an ihrem unteren Ende ein Ventil auf, an welchem ein abnehmbarer Behälter zur Aufnahme von $P_4O_{10}$ ansetzbar ist. In der Innenwand des Gaskühlers wird glasartiges polymeres Phosphorpentoxid $(P_2O_5)_x$ abgeschieden, wobei durch diese Schicht die darunterliegenden Kühlrohre geschützt werden. Im Gaskühler erfolgt eine Abkühlung der $P_4O_{10}$-haltigen Gase auf eine Temperatur von 650 bis 400 °C. In der sich anschließenden Kondensationskammer kann es schlagartig auf weniger als 300 °C abgekühlt werden, wodurch Phosphorpentoxid in der hexagonalen Modifikation erhalten wird.

Das nach der Offenbarung gemäß diesem Dokument hergestellte Phosphorpentoxid weist eine hohe Reaktivität auf, was für die Umsetzung mit Alkoholen zu Phosphorsäureestern von Nachteil ist.

Es ist daher Aufgabe der vorliegenden Erfindung, ein Verfahren zur Herstellung von Phosphorpentoxid anzugeben, bei welchem aus einem in einer Verbrennungszone aus gelbem Phosphor und sauerstoffhaltigen Gasen erhaltenen phosphorpentoxidhaltigen Gasstrom in einer nachgeschalteten, mit Tauchrohr versehenen Kondensationszone mit geringem apparetivem und energetischem Aufwand ein Phosphorpentoxid mit einstellbarer Reaktivität abgeschieden wird. Das wird erfindungsgemäß dadurch erreicht, daß der aus der Verbrennungszone abströmende phosphorpentoxidhaltige Gasstrom vor seinem Eintritt in die Kondensationszone eine durch ein Fluidat indirekt gekühlte Zwischenzone passiert; und daß die Verweilzeit des Gasstromes im Tauchrohr 2 bis 5 Sekunden beträgt.

Das Verfahren gemäß der Erfindung kann weiterhin wahlweise auch noch dadurch ausgestaltet sein, daß

a) die sauerstoffhaltigen Gase ein Volumenverhältnis von Luft zu reinem Sauerstoff von (0,7 bis 7) : 1 aufweisen;

b) die Zwischenzone durch strömendes Wasser indirekt gekühlt wird;

c) des Wasser Temperaturen von 10 bis 30 °C, vorzugsweise von 18 bis 25 °C, aufweist;

d) die Zwischenzone in mehrere Abschnitte unterteilt ist;

e) der Gasstrom im Tauchrohr eine mittlere Temperatur von 470 bis 550 °C aufweist;

f) die Verweilzeit des Gasstromes im Tauchrohr durch Verkleinern des Volumenverhältnisses von Luft zu reinem Sauerstoff bei den zur Verbrennung des gelben Phosphors verwendeten sauerstoffhaltigen Gasen vergrößert wird, und umgekehrt.

Während sehr rasch an gekühlten Flächen auf etwa 350°C abgekühltes phosphorpentoxidhaltiges Gas ein lockeres, wenig fließfähiges hexagonales $P_4O_{10}$ mit hoher Reaktivität liefert, führt nach dem erfindungsgemäßen Verfahren die Abscheidung aus einem Gasstrom mit Temperaturen von 450 bis 600°C zu einem hexagonalem $P_4O_{10}$ mit deutlich niedrigerer Reaktivität.

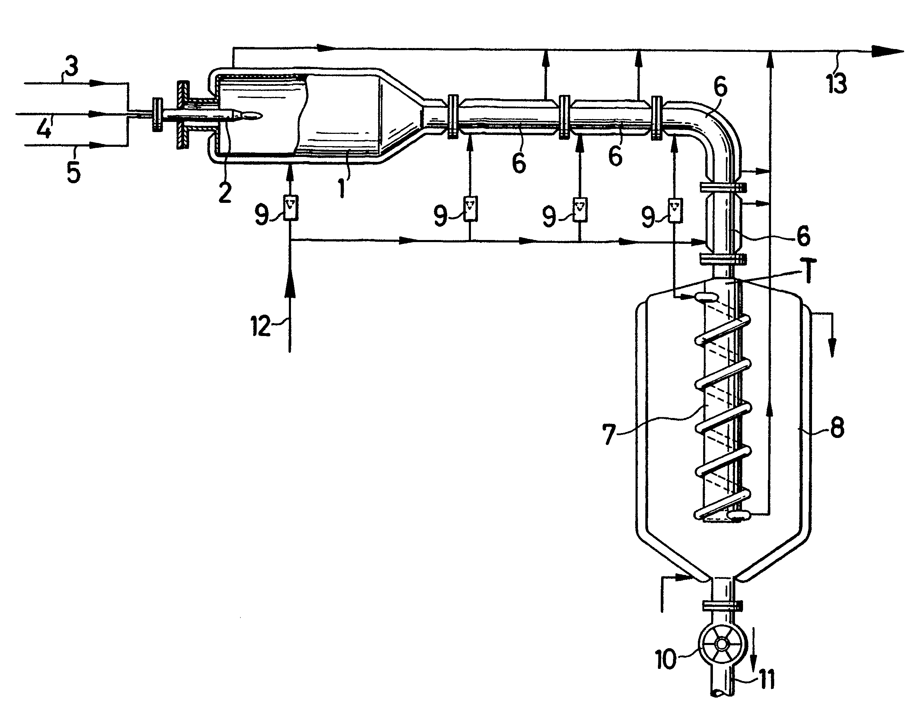

Zur Durchführung des Verfahrens gemäß der Erfindung ist eine in Anlehnung an die aus der US-PS 4 219 533 bekannte Vorrichtung gestaltete Anlage geeignet, welche in der beigefügten Zeichnung schematisch dargestellt ist.

In eine Brennkammer 1 ragt eine Sprühdüse 2 hinein, welche mit Zuführungsleitungen (3, 4, 5) für Luft, flüssigen gelben Phosphor und Sauerstoff verbunden ist. Die Brennkammer 1 steht mit ihrem der Sprühdüse 2 gegenüberliegenden Ende über ein mehrteiliges Abgasrohr 6 mit einem Tauchrohr 7 in Verbindung, wobei des Tauchrohr 7 nahe seinem oberen Ende eine Temperaturmeßeinrichtung T aufweist. Das Tauchrohr 7 ist mit radialem Abstand von einer wassergekühlten Kondensationskammer 8 umgeben, welche an ihrem unteren Ende einen mit einem Zellenrad 10 verschließbaren Entnahmestutzen 11 aufweist.

Von einer Kühlwasser-Vorlaufleitung 12 gehen mehrere, in die Doppelmäntel der Brennkammer 1 und der Teile des Abgasrohres 6 einmündende sowie mit der Kühlschlange des Tauchrohres 7 verbundene Zweigleitungen ab, in welchen sich Durchflußmengenmesser 9 befinden. Weiterhin gehen von den Doppelmänteln der Brennkammer 1 und der Teile des Abgasrohres 6 sowie von der Kühlschlange des Tauchrohres 7 Zweigleitungen ab, welche in eine Kühlwasser-Rücklaufleitung 13 einmünden.

Beim erfindungsgemäßen Verfahren ist das Volumen des phosphorpentoxidhaltigen Gases eine wichtige Einflußgröße. Wie aus der Zeichnung ersichtlich ist, kann die Verbrennung des flüssigen gelben Phosphors mit reinem Sauerstoff, mit Luft oder mit einem Gemisch beider Komponenten erfolgen. Je mehr Luft man zusätzlich zu der zur Verbrennung des gelben Phosphors erforderlichen Sauerstoffmenge in die Verbrennungszone einbringt, um so größer ist das Volumen des phosphorpentoxidhaltigen Gases und damit die Verweilzeit dieses Gases im Tauchrohr um so geringer, so daß nur ein kleiner Anteil des $P_4O_{10}$ aus dem Gas im Tauchrohr und der größere Anteil in der Kondensationszone abgeschieden wird.

Deshalb weist in diesem Fall das aus dem Entnahmestutzen der Kondensationskammer entnehmbare $P_4O_{10}$ insgesamt eine höhere Aktivität auf. Die Gasmenge ist daher so zu bemessen, daß die Verweilzeit im Tauchrohr 2 Sekunden nicht unterschreitet. Andererseits muß sichergestellt sein, daß sich bei geringem Volumen des phosphorpentoxidhaltigen Gases nicht zuviel Material im Tauchrohr absetzt, welches seine Kühlfläche mit einer isolierenden Schicht belegt. Diese isolierende Schicht verursacht eine ungenügende Abkühlung des phosphorpentoxidhaltigen Gasstromes mit der Folge der gleichzeitigen Abscheidung von $P_4O_{10}$ in seiner orthorhombischen Modifikation, wodurch das aus dem Entnahmestutzen der Kondensationskammer entnehmbare $P_4O_{10}$ insgesamt eine zu geringe Reaktivität aufweist. Die Gasmenge ist deshalb so zu bemessen, daß die Verweilzeit im Tauchrohr 5 Sekunden nicht überschreitet.

Beim Verfahren gemäß der Erfindung läßt sich durch die Intensität der Kühlung in der Zwischenzone, d. h. durch die Einstellung der Kühlwassermenge, welche das mehrteilige Abgasrohr durchströmt und durch das Volumen des phosphorpentoxidhaltigen Gasstromes, d. h. durch die Einstellung der Zusatzluft an der Sprühdüse, ein $P_4O_{10}$ mit gewünschter physikalischer Struktur und damit einhergehend gewünschter chemischer Reaktivität erhalten.

In den folgenden Beispielen, welche der näheren Erläuterung der Erfindung dienen sollen, wird mit dem jeweils erhaltenen $P_4O_{10}$ zur Bestimmung seiner Reaktivität ein Test durchgeführt, der in Anlehnung an die in der US-PS 3 077 382 (vergl. Spalte 6, Zeilen 33 bis 47) beschriebene Prüfmethode ausgearbeitet wurde:

150 ml mit Phosphorpentoxid getrocknetes Kerosin (Aromatenanteil kleiner als 1 %) wird mit einer Temperatur von 22 bis 24°C in ein 500-ml-Dewargefäß eingefüllt und 20 g des zu testenden Phosphorpentoxids hinzugefügt. Die Mischung wird 30 s mit einem Kreuzblattrührer bei 600 Upm gerührt und anschließend unter weiterem Rühren 100 ml 2-Ethylhexanol mit einer Temperatur von 22 bis 24°C zugesetzt.

Die in der Suspension mit einem Fühler gemessene Temperatur wird auf einen x, y-Schreiber übertragen und gegen die Zeit aufgezeichnet. Die Zeit t, welche zwischen dem Anstieg von 5 auf 30°C liegt, wird graphisch ermittelt und daraus der Reaktivitätskoeffizient

$$R = \frac{25}{t} \quad [°C/s]$$

errechnet.

Beispiel 1 (Nach dem Stand der Technik)

Es wurde eine Anlage gemäß der Zeichnung benutzt, jedoch wurden die Doppelmäntel des dreiteiligen Abgasrohres 6 nicht mit Kühlwasser beaufschlagt.

In der im wesentlichen zylindrischen Brennkammer 1 wurden stündlich 100 l (= 170 kg) flüssiger gelber Phosphor mit 680 m$^3$ trockener Luft von 5 bar verbrannt. Das phosphorpentoxidhaltige Gas trat mit einer Temperatur von 900 °C in das Tauchrohr 7 ein. Beim Austritt aus dem Tauchrohr wies das Gas eine Temperatur von ca. 680 °C auf. In der Kondensationskammer 8 wurde das Gas schlagartig abgekühlt. An den Wänden der Kondensationskammer 8 setzte sich hexagonales P$_4$O$_{10}$ ab. Das aus dem Entnahmestutzen 11 abgezogene P$_4$O$_{10}$ wies eine Reaktivität von 5,6 °C/s und hexagonale Struktur auf.

Beispiel 2 (Vergleichsbeispiel)

Es wurde die in Beispiel 1 benutzte Anlage verwendet, jedoch wurden durch die drei Doppelmäntel des dreiteiligen Abgasrohres 6 stündlich 33 m$^3$ Kühlwasser von 23 °C geleitet.

In der Brennkammer 1 wurden stündlich 100 l flüssiger gelber Phosphor mit 1200 Nm$^3$ trockener Luft verbrannt. Bei der Verbrennung des gelben Phosphors gemäß der Gleichung

P$_4$ + 5 O$_2$ → P$_4$O$_{10}$

wurden 153 Nm$^3$ Sauerstoff verbraucht, so daß das gebildete P$_4$O$_{10}$ in einer Gasmenge von 1200 - 153 = 1047 Nm$^3$ enthalten war.

Das Tauchrohr 7 wies bei einer Länge von 5000 mm einen Durchmesser von 500 mm auf; sein Querschnitt beträgt mithin 0,196 m$^2$ und sein Volumen 0,98 m$^3$.

Die Temperatur des das P$_4$O$_{10}$ enthaltenden Gases betrug im oberen Bereich des Tauchrohres 7 (an der Meßstelle T) 600 °C, während seine Temperatur am Ausgang des Tauchrohres 400 °C betrug; die mittlere Temperatur im Tauchrohr betrug etwa 500 °C.

Demgemäß entspricht das trockene Gasvolumen von 1047 Nm$^3$/h einem Volumen von etwa 2960 Betriebs-m$^3$/h oder 0,82 Bm$^3$/s.

Die mittlere Verweilzeit des das P$_4$O$_{10}$ enthaltenden Gases im Tauchrohr betrug damit 0,98 : 0,82 = 1,2 Sekunden.

Das in der Kondensationskammer 8 abgeschiedene P$_4$O$_{10}$ hattehexagonale Struktur und wies eine Reaktivität von 5,8 °C/s auf.

Beispiel 3 (Vergleichsbeispiel)

Es wurde die in den Beispielen 1 und 2 benutzte Anlage verwendet; jedoch wurden durch jeden der Doppelmäntel des dreiteiligen Abgasrohres 6 9 m$^3$, also insgesamt 27 m$^3$ Kühlwasser von 23 °C geleitet.

In der Brennkammer 1 wurden stündlich 100 l flüssiger gelber Phosphor mit einer aus 1000 Nm$^3$ Luft und 100 Nm$^3$ Sauerstoff bestehenden trockenen Gasmischung verbrannt. Das dabei gebildete P$_4$O$_{10}$ war in einer Gasmenge von 1100 - 153 = 947 Nm$^3$ enthalten.

Die Temperatur des das P$_4$O$_{10}$ enthaltenden Gases betrug im Tauchrohr 7 an der Meßstelle T 586 °C und am Ausgang des Tauchrohres 397 °C; die mittlere Temperatur im Tauchrohr betrug etwa 492 °C.

Demgemäß entspricht das trockene Gasvolumen von 947 Nm$^3$/h einem Volumen von etwa 2650 Bm$^3$/h oder 0,73 Bm$^3$/s.

Die mittlere Verweilzeit des das P$_4$O$_{10}$ enthaltenden Gases im Tauchrohr betrug damit 0,98 : 0,73 = 1,3 Sekunden.

Das in der Kondensationskammer 8 abgeschiedene P$_4$O$_{10}$ hatte hexagonale Struktur und wies eine Reaktivität von 4,7 °C/s auf.

Beispiel 4 (gemäß der Erfindung)

Es wurde die entsprechend dem Beispiel 3 mit Kühlwasser beaufschlagte Anlage verwendet.

In der Brennkammer 1 wurden stündlich 100 l flüssiger gelber Phosphor mit einer aus 650 Nm$^3$ Luft und 100 Nm$^3$ Sauerstoff bestehenden trockenen Gasmischung verbrannt. Das dabei gebildete P$_4$O$_{10}$ war in einer Gasmenge von 750 - 153 = 597 Nm$^3$ enthalten.

Die Temperatur des das P$_4$O$_{10}$ enthaltenden Gases betrug im Tauchrohr 7 an der Meßstelle T 580 °C und am Ausgang des Tauchrohres 396 °C; die mittlere Temperatur im Tauchrohr betrug etwa 488 °C.

Demgemäß entspricht das trockene Gasvolumen von 597 Nm$^3$/h einem Volumen von etwa 1670 Bm$^3$/h oder 0,46 Bm$^3$/s.

Die mittlere Verweilzeit des das P$_4$O$_{10}$ enthaltenden Gases im Tauchrohr betrug damit 0,98 : 0,46 = 2,13 Sekunden.

Das in der Kondensationskammer 8 abgeschiedene P$_4$O$_{10}$ hatte hexagonale Struktur und wies eine Reaktivität von 3,4 °C/s auf.

Beispiel 5 (gemäß der Erfindung)

Es wurde die in den Beispielen 1 und 2 benutzte Anlage verwendet; jedoch wurden durch jeden der Doppelmäntel des dreiteiligen Abgasrohres 6 8 m$^3$, also insgesamt 24 m$^3$ Kühlwasser von 23 °C geleitet.

In der Brennkammer 1 wurden stündlich 100 l flüssiger gelber Phosphor mit einer aus 350 Nm$^3$ Luft und 200 Nm$^3$ Sauerstoff bestehenden trockenen Gasmischung verbrannt. Das dabei gebildete

$P_4O_{10}$ war in einer Gasmenge von 550 - 153 = 397 $Nm^3$ enthalten.

Die Temperatur des das $P_4O_{10}$ enthaltenden Gases betrug im Tauchrohr 7 an der Meßstelle T 610° C und am Ausgang des Tauchrohres 399° C; die mittlere Temperatur im Tauchrohr betrug etwa 505° C.

Demgemäß entspricht das trockene Gasvolumen von 397 $Nm^3$/h einem Volumen von etwa 1140 $Bm^3$/h oder 0,32 $Bm^3$/s.

Die mittlere Verweilzeit des das $P_4O_{10}$ enthaltenden Gases im Tauchrohr betrug damit 0,98 : 0,32 = 3,06 Sekunden.

Das in der Kondensationskammer 8 abgeschiedene $P_4O_{10}$ hattehexagonale Struktur und wies eine Reaktivität von 1,9° C/s auf.

Beispiel 6 (gemäß der Erfindung)

Es wurde die entsprechend Beispiel 5 mit Kühlwasser beaufschlagte Anlage verwendet.

In der Brennkammer 1 wurden stündlich 100 l flüssiger gelber Phosphor mit einer aus 200 $Nm^3$ Luft und 250 $Nm^3$ Sauerstoff bestehenden trockenen Gasmischung verbrannt. Das dabei gebildete $P_4O_{10}$ war in einer Gesmenge von 450 - 153 = 297 $Nm^3$ enthalten.

Die Temperatur des das $P_4O_{10}$ enthaltenden Gases betrug im Tauchrohr 7 an der Meßstelle T 560° C und am Ausgang des Tauchrohres 384° C; die mittlere Temperatur im Tauchrohr betrug etwa 472° C.

Demgemäß entspricht das trockene Gasvolumen von 297 $Nm^3$/h einem Volumen von etwa 820 $Bm^3$/h oder 0,23 $Bm^3$/s.

Die mittlere Verweilzeit des das $P_4O_{10}$ enthaltenden Gases im Tauchrohr betrug damit 0,98 : 0,23 = 4,3 Sekunden.

Das in der Kondensationskammer 8 abgeschiedend $P_4O_{10}$ wies eine Reaktivität von 1,6° C/s auf.

Beispiel 7 (Vergleichsbeispiel)

Es wurde die in den Beispielen 1 und 2 benutzte Anlage verwendet; jedoch wurden durch jeden der Doppelmäntel des dreiteiligen Abgasrohres 6 4,5 $m^3$, also insgesamt 13,5 $m^3$ Kühlwasser von 23° C geleitet.

In der Brennkammer 1 wurden stündlich 100 l flüssiger gelber Phosphor mit einer aus 350 $Nm^3$ Luft und 200 $Nm^3$ Sauerstoff bestehenden trockenen Gasmischung verbrannt. Das dabei gebildete $P_4O_{10}$ war in einer Gasmenge von 550 - 153 = 397 $Nm^3$ enthalten.

Die Temperatur des das $P_4O_{10}$ enthaltenden Gases betrug im Tauchrohr 7 an der Meßstelle T 805° C und am Ausgang des Tauchrohres 560° C; die mittlere Temperatur im Tauchrohr betrug etwa 682° C.

Demgemäß entspricht das trockene Gasvolumen von 397 $Nm^3$/h einem Volumen von etwa 1400 $Bm^3$/h oder 0,39 $Bm^3$/s.

Die mittlere Verweilzeit des das $P_4O_{10}$ enthaltenden Gases im Tauchrohr betrug damit 0,98 : 0,39 = 2,5 Sekunden.

Das in der Kondensationskammer 8 abgeschiedene $P_4O_{10}$ hattehexagonale Struktur und wies eine Reaktivität von 3,6° C/s auf.

Beispiel 8 (Vergleichsbeispiel)

Es wurde die entsprechend dem Beispiel 3 mit Kühlwasser beaufschlagte Anlage verwendet.

In der Brennkammer 1 wurden stündlich 100 l flüssiger gelbar Phosphor mit einer aus 500 $Nm^3$ Luft und 200 $Nm^3$ Sauerstoff bestehenden trockenen Gasmischung verbrannt. Das dabei gebildete $P_4O_{10}$ war in einer Gasmenge von 700 - 153 = 547 $Nm^3$ enthalten.

Die Temperatur des das $P_4O_{10}$ enthaltenden Gases betrug im Tauchrohr 7 an der Meßstelle T 500° C und am Ausgang des Tauchrohres 310° C; die mittlere Temperatur im Tauchrohr betrug etwa 405° C.

Demgemäß entspricht das trockene Gasvolumen von 547 $Nm^3$/h einem Volumen von etwa 1370 $Bm^3$/h oder 0,38 $Bm^3$/s.

Die mittlere Verweilzeit des das $P_4O_{10}$ enthaltenden Gases im Tauchrohr betrug damit 0,98 : 0,38 = 2,6 Sekunden.

Das in der Kondensationskammer 8 abgeschiedene $P_4O_{10}$ wies eine Reaktivität von 1,8° C/s auf.

Nach einer Betriebszeit von 90 Stunden begann der Eingang des Tauchrohres 7 mit glasigem, orthorhomischem $P_4O_{10}$ zuzuwachsen, was zu einem den Abbruch der Produktion erfordernden Druckanstieg in der Brennkammer 1 führte.

**Patentansprüche**

1. Verfahren zur Herstellung von hexagonalem Phosphorpentoxid mit verminderter Reaktivität durch Abscheidung aus einem in einer Verbrennungszone aus flüssigem gelbem Phosphor und trockenen sauerstoffhaltigen Gasen erhaltenen phosphorpentoxidhaltigen Gasstrom in einer der Verbrennungszone nachgeschalteten, mit einem wassergekühlten Tauchrohr versehenen Kondensationszone, wobei die sauerstoffhaltigen Gase aus einem Gemisch aus Luft und reinem Sauerstoff bestehen und wobei der Gasstrom im Tauchrohr eine mittlere Temperatur von 450 bis 600 ° C aufweist, dadurch gekennzeichnet, daß der aus der Verbrennungszone abströmende phosphorpentoxidhaltige Gasstrom vor seinem Eintritt in die Kondensationszone eine durch ein Fluidat indirekt gekühlte Zwischenzone passiert; und daß die Verweilzeit des Gasstromes im Tauchrohr 2 bis 5 Sekunden beträgt.

2. Verfahren nich Anspruch 1, dadurch gekennzeichnet, daß die sauerstoffhaltigen Gase ein Volumenverhältnis von Luft zu reinem Sauerstoff von (0,7 bis 7) : 1 aufweisen.

3. Verfahren nach Anspruch 1 oder 2, dadurch gekennzeichnet, daß die Zwischenzone durch strömendes Wasser indirekt gekühlt wird.

4. Verfahren nach Anspruch 3, dadurch gekennzeichnet, daß das Wasser Temperaturen von 10 bis 30 °C, vorzugsweise von 18 bis 25 °C, aufweist.

5. Verfahren nach einem der Ansprüche 1 bis 4, dadurch gekennzeichnet, daß die Zwischenzone in mehrere Abschnitte unterteilt ist.

6. Verfahren nach einem der Ansprüche 1 bis 5, dadurch gekennzeichnet, daß der Gasstrom im Tauchrohr eine mittlere Temperatur von 470 bis 550 °C aufweist.

7. Verfahren nach einem der Ansprüche 1 bis 6, dadurch gekennzeichnet, daß die Verweilzeit des Gasstromes im Tauchrohr durch Verkleinern des Volumenverhältnisses von Luft zu reinem Sauerstoff bei den zur Verbrennung des gelben Phosphors verwendeten sauerstoffhaltigen Gasen vergrößert wird, und umgekehrt.

## Claims

1. A process for producing hexagonal phosphorus pentoxide of reduced reactivity by precipitation from a phosphorus pentoxide-containing gas stream, obtained in a combustion zone from liquid yellow phosphorus and dry oxygen-containing gases, in a condensation zone located downstream of the combustion zone and provided with a water-cooled dip tube, the oxygen-containing gases being composed of a mixture of air and pure oxygen and the gas stream having a mean temperature from 450 to 600 °C in the dip tube, wherein the phosphorus pentoxide-containing gas stream flowing out of the combustion zone passing, before it enters the condensation zone, through an intermediate zone cooled indirectly by a fluidate, and wherein the residence time of the gas stream in the dip tube is 2 to 5 seconds.

2. The process as claimed in claim 1, wherein the oxygen-containing gases have an air/pure oxygen volume ratio of (0.7 to 7) : 1.

3. The process as claimed in claim 1 or 2, wherein the intermediate zone is indirectly cooled by flowing water.

4. The process as claimed in claim 3, wherein the water is at temperatures from 10 to 30 °C, preferably from 18 to 25 °C.

5. The process as claimed in any of claims 1 to 4, wherein the intermediate zone is subdivided into a plurality of sections.

6. The process as claimed in any of claims 1 to 5, wherein the gas stream is at a mean temperature from 470 to 550 °C in the dip tube.

7. The process as claimed in any of claims 1 to 6, wherein the residence time of the gas stream in the dip tube is increased by reducing the air/pure oxygen volume ratio in the oxygen-containing gases used for the combustion of the yellow phosphorus, and vice versa.

## Revendications

1. Procédé pour la fabrication de pentoxyde de phosphore hexagonal de réactivité réduite par dépôt à partir d'un courant gazeux contenant du pentoxyde de phosphore, obtenu dans une zone de combustion à partir de phosphore blanc liquide et de gaz secs contenant de l'oxygène, dans une zone de condensation munie d'un tube plongeant refroidi par l'eau, branchée à la suite de la zone de combustion, les gaz contenant de l'oxygène consistant en un mélange d'air et d'oxygène pur et le courant gazeux présentant dans le tube plongeant une température moyenne de 450 à 600 °C, caractérisé en ce que le courant gazeux contenant du pentoxyde de phosphore sortant de la zone de combustion traverse, avant son entrée dans la zone de condensation, une zone intermédiaire refroidie indirectement par des solides fluidisé ; et en ce que la durée de passage du courant gazeux dans le tube plongeant est de 2 à 5 s.

2. Procédé selon la revendication 1, caractérisé en ce que les gaz contenant de l'oxygène présentent un rapport en volume de l'air à l'oxygène pur de (0,7 à 7) : 1.

3. Procédé selon la revendication 1 ou 2, caractérisé en ce que la zone intermédiaire est refroidie indirectement par une circulation d'eau.

4. Procédé selon la revendication 3, caractérisé en ce que l'eau présente des températures de 10 à 300° C, de préférence de 18 à 25° C.

5. Procédé selon une ou plusieurs des revendications 1 à 4, caractérisé en ce que la zone intermédiaire est divisée en plusieurs sections.

6. Procédé selon une ou plusieurs des revendications 1 à 5, caractérisé en ce que le courant gazeux présente dans le tube plongeant une température moyenne de 470 à 550° C.

7. Procédé selon une ou plusieurs des revendications 1 à 6, caractérisé en ce que la durée de passage du courant gazeux dans le tube plongeant est augmentée par diminution du rapport en volume de l'air à l'oxygène pur dans les gaz contenant de l'oxygène utilisés pour la combustion du phosphore blanc, et inversement.